(19) Europäisches Patentamt / European Patent Office / Office européen des brevets

(11) **EP 4 409 336 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(21) Anmeldenummer: **22790551.0**

(22) Anmeldetag: **01.10.2022**

(51) Internationale Patentklassifikation (IPC):
*G01W 1/02* (2006.01)    *G01H 5/00* (2006.01)
*G01W 1/14* (2006.01)

(52) Gemeinsame Patentklassifikation (CPC):
**G01W 1/14; G01H 5/00; G01W 1/02**

(86) Internationale Anmeldenummer:
**PCT/EP2022/077420**

(87) Internationale Veröffentlichungsnummer:
**WO 2023/052641 (06.04.2023 Gazette 2023/14)**

(54) **VERFAHREN UND VORRICHTUNG ZUR ERFASSUNG VON NIEDERSCHLAGSEREIGNISSEN**

METHOD AND DEVICE FOR ACQUIRING PRECIPITATION DATA

PROCÉDÉ ET DISPOSITIF D'ACQUISITION DE DONNÉES DE PRÉCIPITATIONS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.10.2021 DE 102021125579**

(43) Veröffentlichungstag der Anmeldung:
**07.08.2024 Patentblatt 2024/32**

(73) Patentinhaber: **Metek Meteorologische Messtechnik GmbH 25337 Elmshorn (DE)**

(72) Erfinder: **PETERS, Gerhard 22547 Hamburg (DE)**

(74) Vertreter: **Heinemeyer, Karsten AdvInno Patent-u. Rechtsanwaltspart. mbB Heinemeyer & Joachim Sandstrasse 17-23 23552 Lübeck (DE)**

(56) Entgegenhaltungen:
**DE-A1- 102015 004 408    DE-T2- 68 901 800**

• **ZHANG RONGWANG ET AL: "Effects of precipitation on sonic anemometer measurements of turbulent fluxes in the atmospheric surface layer", OCEAN UNIVERSITY OF CHINA. JOURNAL, ZHONGGUO HAIYANG DAXUE, CN, vol. 15, no. 3, 7 May 2016 (2016-05-07), pages 389 - 398, XP035680292, ISSN: 1672-5182, [retrieved on 20160507], DOI: 10.1007/S11802-016-2804-4**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren sowie ein Verfahren zur Erfassung von Niederschlagsereignissen. Hierbei sind auf gegenüberliegenden Seiten einer Messstrecke Schallwandler angeordnet, die jeweils abwechselnd während eines Sendezeitraums Ultraschallwellen zumindest bereichsweise entlang der Messstrecke derart emittieren, sodass der nicht sendende Schallwandler die ausgesandten Ultraschallwallen zumindest teilweise empfängt. Während des Empfangs der Ultraschallwellen erzeugen die Schallwandler in Abhängigkeit einer Eigenschaft der empfangenen Ultraschallwellen Messsignale, die über eine Datenübertragungsstrecke an eine Auswerteeinheit übertragen werden, in der auf der Grundlage einer Frequenz der Messsignale eine Information über wenigstens einen Atmosphärenparameter erzeugt wird.

Aus dem Stand der Technik sind unterschiedliche Messinstrumente bekannt, mit denen die lokale Messung der Geschwindigkeit eines Strömungsfeldes, insbesondere der Windgeschwindigkeit, erfolgt. Eine besondere Gattung von Windmessgeräten bzw. sogenannten Anemometern sind die Ultraschallanemometer. Bereits seit langem bekannte Ultraschallanemometer nutzen das Prinzip der Messung der Laufzeit der Schallwellen zwischen Sender und Empfänger. Hierbei wird ausgenutzt, dass Schallwellen von dem Medium, in dem sie sich ausbreiten, mitgeführt werden, sodass die Laufzeit von Signalen über eine Messstrecke fester Länge von der Durchströmung der Messstrecke abhängt. Mit Hilfe von Schallwellen hoher Frequenz bzw. hoher Bandbreite können Laufzeiten besonders genau bestimmt werden, sodass auf Messstrecken mit kurzer Distanz bevorzugt hochfrequente Schallwellen zum Einsatz kommen. Da die Schallgeschwindigkeit sowohl von der Lufttemperatur als auch von der Luftfeuchte abhängt, werden üblicherweise Laufzeiten in beiden Richtungen, also bidirektional, bestimmt. Aus der Summe dieser beiden Laufzeiten kann ferner die sogenannte virtuelle Temperatur berechnet werden.

Bekannte Ultraschallanemometer verfügen üblicherweise über mehrere Messstrecken zwischen den einzelnen Ultraschallsendern und -empfängern, über die die Schallgeschwindigkeit in verschiedenen Raumrichtungen gemessen wird. Aus den ermittelten Messwerten berechnet eine Messelektronik die horizontale und die vertikale Windgeschwindigkeit.

Ein derartiges Ultraschallanemometer ist aus der DE 689 01 800 T2 bekannt. Mit dem beschriebenen Ultraschallanemometer werden die Laufzeiten von Schallwellen auf verschiedenen Messstrecken zwischen den einzelnen Ultraschallwandlern erfasst und ausgewertet, wobei die Ultraschallwandle, derart angeordnet sind, dass sie mindestens drei verschiedene Ultraschallübertragungsbahnen in der Luft definieren. Weiterhin ist eine Messelektronik vorgesehen, sodass auf der Grundlage der Messung der Ausbreitungszeiten der Ultraschallwellen entlang der verschiedenen Bahnen sowohl die Windrichtung als auch die Windgeschwindigkeit unter Berücksichtigung der gemessenen Ausbreitungszeiten ermittelt werden.

Weiterhin beschreibt die DE 10 2015 004 408 A1 ein Ultraschallanemometer, das über wenigstens zwei Schallwandler verfügt, zwischen denen eine Messstrecke angeordnet ist, wobei aufgespannten Messstrecken unterschiedlich im Raum angeordnet sein können. Wesentlich für die beschriebene technische Lösung ist, dass Oberflächen der Schallwandler gegenüber einer Vertikalen geneigt sind, sodass Feuchtigkeit, Schnee oder sonstige Partikel von der jeweiligen Oberfläche abrutschen können.

Darüber hinaus werden in meteorologischen Instrumentierungen oft Sensoren eingesetzt, die gegen Niederschläge wie Regen und Schnee geschützt werden müssen oder deren Signale im Fall von derartigen Niederschlagsereignissen nicht auswertbar sind. Im Übrigen ist für die Analyse und Bewertung meteorologischer Messreihen oft die Kenntnis über die Zeitpunkte oder Zeiträume notwendig, in denen Niederschlagsereignisse auftreten. Hierfür werden Niederschlagsdetektoren unterschiedlicher Bauart, etwa ein Regenradar, wie es aus der DE 103 05 139 B4 bekannt ist, eingesetzt werden.

Zhang et al. 2016 ("Effects of precipitation on sonic anemometer measurements of turbulent fluxes in the atmospheric surface layer", in: Journal of Ocean University of China, 15(3): 389-398) offenbart eine Untersuchung des Effekts von Niederschlägen auf die Messung der Windgeschwindigkeit und -richtung sowie der Schalltemperatur mithilfe eines dreidimensionalen Ultraschallanemometers.

Ausgehend von den aus dem Stand der Technik bekannten Lösungen stellt sich generell die Aufgabe, den Aufwand für meteorlogische Messungen hinsichtlich der benötigten Messinstrumente als auch für die erforderliche Datenauswertung zu minimieren und dennoch Niederschlagsereignisse mit hoher Zuverlässigkeit detektieren zu können. In diesem Zusammenhang liegt der Erfindung die Aufgabe zugrunde eine Messvorrichtung sowie ein Messverfahren anzugeben, sodass ohne eine zusätzlich erforderliche Instrumentierung die Messung zumindest einer Komponente der Windgeschwindigkeit und/oder der Windrichtung und auch die Detektion eines Niederschlagsereignisse mit hoher Genauigkeit und Zuverlässigkeit möglich ist. Mit der anzugebenden Lösung sollten somit der Zeitpunkt und die Dauer eines Niederschlagsereignisses, wie etwa Regen oder Schneefall, möglichst exakt bestimmbar und auf verhältnismäßig einfache Weise einer Messung meteorologischer Parameter zur Verfügung stellbar sein. Von Vorteil wäre es hierbei, wenn die Signal- und Datenauswertung zur Erfassung eines Niederschlagsereignisses auf möglichst einfache Weise realisierbar ist.

Die zuvor beschriebene Aufgabe wird mit einem Verfahren gemäß Anspruch 1 sowie einer Vorrichtung nach Anspruch 12 gelöst. Vorteilhafte Ausführungsformen der Erfindung sind Gegenstand der abhängigen Ansprüche und werden in der folgenden Beschreibung unter teilweiser Bezugnahme auf Figuren näher erläutert.

Die Erfindung bezieht sich zunächst auf ein Verfahren zur Erfassung von Niederschlagsereignissen, bei dem von zwei auf gegenüberliegenden Seiten einer Messstrecke angeordneten Schallwandler jeweils abwechselnd während eines Sendezeitraums Ultraschallwellen zumindest bereichsweise entlang der Messstrecke derart aussenden, dass in einem ersten Sendezeitraum ein erster der Schallwandler Ultraschallwellen emittiert, während der gegenüberliegende zweite Schallwandler die ausgesandten Ultraschallwellen zumindest teilweise empfängt, und bei dem in wenigstens einem zweiten Sendezeitraum der zweite Schallwandler Ultraschallwellen emittiert, während der erste Schallwandler die ausgesandten Ultraschallwellen zumindest teilweise empfängt. Die Schallwandler erzeugen jeweils während des Empfangs der Ultraschallwellen in Abhängigkeit einer Eigenschaft der empfangenen Schallwellen bzw. Schallsignale zumindest ein Messignal, das über eine Datenübertragungsstrecke drahtlos oder drahtgebunden an eine Auswerteeinheit übertragen wird, in der auf der Grundlage der Messsignale eine Information über wenigstens einen Atmosphärenparameter erzeugt wird. Erfindungsgemäß ist das Verfahren derart weitergebildet worden, dass die Auswerteeinheit Änderungen der Frequenz der von den Schallwandlern erzeugten Messsignale detektiert und auswertet, eine Größe und einen Verlauf der Frequenzen während der Frequenzänderungen erfasst und in Abhängigkeit der Größe der Frequenzänderung sowie eines Vergleichs der Frequenzverläufe während der Frequenzänderung, also der Veränderung der Frequenz innerhalb eines Messzeitraums, ein Niederschlagsereignis erkennt und eine Information über die Erkennung des Niederschlagsereignisses ausgibt. Während bei den bekannten Systemen zur Erfassung von Atmosphäreneigenschaften, insbesondere der Windgeschwindigkeit und/oder - richtung, das Messignal lediglich im Hinblick auf eine Laufzeit der Schallwellen zwischen Sender und Empfänger ausgewertet wird, findet gemäß der Erfindung eine spezielle Auswertung von Frequenzeigenschaften des Messsignals statt. Hierbei wird die zusätzliche Auswertung spezieller Frequenzeigenschaften, insbesondere von Frequenzänderungen genutzt, um Aussagen über Niederschlagsereignisse machen zu können.

Wesentlich ist somit, dass spezifische Änderungen der Frequenz des Messsignals bzw. eines Empfangssignals, das durch die erzwungene Schwingung eines als Empfänger arbeitenden Schallwandlers aufgrund der auftreffenden Schallwellen verursacht wird, erzeugt werden.

Hierbei werden insbesondere die Größe einer Frequenzänderung als auch der zeitliche Verlauf einer Frequenzänderung, somit die Entwicklung einer Frequenzänderung in einem Messzeitraum, ausgewertet. Gemäß der Erfindung ist erkannt worden, dass die beiden zuvor genannten Eigenschaften einer Änderung der Frequenz des Messsignals auf geeignete Weise verwendet werden können, um zuverlässig ein Niederschlagsereignis, und zwar sowohl den Zeitpunkt des Beginns, des Endes und damit des Zeitraums, zu detektieren bzw. zu erfassen.

Erfindungsgemäß ist somit erkannt worden, dass bestimmte Veränderungen der Frequenz und insbesondere des Verlaufs oder der zeitlichen Änderung einer Frequenzänderung zur Detektion von Niederschlagsereignissen verwendet werden können. Hierzu empfängt die Auswerteeinheit auf vorteilhafte Weise das wenigstens eine Messignal, verstärkt und wandelt dieses zur weiteren Auswertung in ein Digitalsignal um.

Die Änderung der Frequenz des Messsignals beruht vermutlich darauf, dass sich eine Wasserschicht auf zumindest einem der Schallwandler, insbesondere dem unteren, bildet oder am oberen Schallwandler ein Wassertropfen hängt. Durch die Wasserschicht oder den anhängenden Wassertropfen wird die schwingende Masse des jeweiligen Schallwandlers vergrößert, wobei die Rückstellkräfte zumindest in etwa gleichbleiben. Hierdurch wird die Resonanzfrequenz des Schallwandlers abgesenkt, sodass letztendlich von einem ähnlichen Effekt, wie bei der Variation der Klanghöhe beim Berühren von unterschiedlich gefüllten Wassergläsern ausgegangen werden kann. Da die mittleren Frequenzen neben dem Niederschlag auch anderen Einflussfaktoren unterliegen, wie etwa der Temperatur, eignen sie sich nicht zur zuverlässigen Detektion von Niederschlagsereignissen. Deshalb werden gemäß einer besonderen Ausführungsform der Erfindung nicht primär die Frequenzen der Messsignale selbst, sondern die Feinstrukturen ihrer zeitlichen Änderung zur Niederschlagsdetektion verwendet. Vorzugsweise werden hierbei während der Auswertung zumindest teilweise Standardabweichungen der Frequenzen ermittelt und der Detektion von Niederschlagsarten zu Grunde gelegt.

Gemäß einer besonderen Ausführungsform der Erfindung ist vorgesehen, dass beim Auswerten der Messignale das Auftreten eines Niederschlagsereignisses erkannt wird, wenn ein für die Größe der Frequenzänderung festgelegter Grenzwert überschritten wird und die Verläufe, also die zeitlichen Änderungen der Frequenzänderungen der von den gegenüberliegenden Schallwandlern erzeugten Messsignale zumindest annähernd gleich, gleichlaufend und/oder mittlere Steigungen der zeitlichen Frequenzänderungen zumindest annähernd gleich sind. Gemäß dieser Ausführungsform wird eine spezifische Art einer Frequenzänderung detektiert und gleichzeitig ein Vergleich der an gegenüberliegenden denn Schallwandlern erzeugten Messsignale durchgeführt. Ein Niederschlagsereignis wird in diesem Fall detektiert, also auf das Vorhandensein eines Niederschlagsereignisses geschlossen, sobald einerseits die Größe der Frequenzänderung der Messsignale einen festgelegten Grenzwert überschritten hat und andererseits die Verläufe der Frequenzänderungen der von gegenüberliegenden Schallwandlern erzeugten Messsignale eine bestimmte Eigenschaft aufweisen, beispielsweise die mittlere Steigung der Frequenzänderungen einen spezifischen Wert oder spezifische Werte aufweisen.

Weiterhin ist denkbar, dass beim Auswerten der Messsignale die Frequenzen der von den gegenüberliegenden Schallwandlern in einem Messzeitraum erzeugten Messsignale wenigstens zeitweise addiert und/oder daraus Mittelwerte gebildet werden. In diesem Fall wird somit jeweils wenigstens ein Wert, bevorzugt eine Mehrzahl von in einem Messzeitraum liegenden Werten, der Frequenz der Messignale addiert und/oder daraus zumindest ein Mittelwert gebildet. Bei der zuvor beschriebenen bevorzugten Auswertung der von gegenüberliegend angeordneten Schallwandlern erzeugten Messsignale wird berücksichtigt, dass es bei Bildung einer Wasserschicht auf einem der beiden oder auf beiden Schallwandlern zu einer Änderung der Frequenzen der erzeugten Messsignale an beiden Schallwandlern kommt. Weist nur einer der beiden Schallwandler eine Wasserschicht auf seiner Oberfläche auf, beeinflusst die damit verbundene Änderung der Eigenfrequenz, zumindest sobald dieser Schallwandler die Funktion eines Senders übernimmt, auch das Schwingungsverhalten des gegenüberliegenden Schallwandlers, selbst wenn dessen Oberfläche nicht mit Wasser benetzt ist. In diesem Zusammenhang ist erkannt worden, dass bei Auftreten von Niederschlagsereignissen, insbesondere bei Regen, die Frequenzänderungen der von den Schallwandlern erzeugten Messsignale in der Regel stufenartig oder mit impulsartigen Frequenzsprüngen verlaufen, wobei bei der Auswertung der Messsignale vorzugsweise berücksichtigt wird, dass Frequenzänderungen nicht nur bei auftretenden Niederschlagserscheinen, sondern auch in regenfreien Perioden auftreten können. In einer besonderen Weiterbildung der Erfindung werden daher bei der Auswertung der Frequenzen der erzeugten Messsignale Temperaturschwankungen und/oder Effekte aufgrund der Verdunstung von Wasser berücksichtigt. Überraschend wurde diesbezüglich festgestellt, dass die durch die letztgenannten Einflussfaktoren verursachten Frequenzänderungen der Messsignale träge sind, sich der Verlauf einer Frequenzänderung somit verhältnismäßig langsam ändert. Auf vorteilhafte Weise erfolgt daher eine Unterscheidung zwischen diesen vergleichsweise langsamen von den sprunghaften und damit niederschlagsinduzierten, oftmals regeninduzierten Frequenzänderungen.

Ebenso wurde festgestellt, dass schnelle Änderungen der Frequenz der von den Schallwandlern erzeugten Messignale auch durch Turbulenzen in der Atmosphäre verursacht werden können und somit ein generelles Risiko besteht, dass turbulenzinduzierte Frequenzänderungen mit niederschlagsinduzierten Frequenzänderungen verwechselt werden. Um die Zuverlässigkeit der Niederschlagsdetektion weiter zu erhöhen, sieht daher eine spezielle Ausführungsform der Erfindung vor, einen wesentlichen Unterschied zwischen niederschlagsinduzierten und sonstigen schnellen Änderungen der Frequenz bei der Auswertung der von den Schallwandlern erzeugten Messsignale zu nutzen. Berücksichtigt wird in diesem Fall, dass bei niederschlagsinduzierten Frequenzänderungen die Frequenzänderungen der jeweils von gegenüberliegend angeordneten Schallwandlern mit hoher relativer Genauigkeit gleich verlaufen, also die Frequenzänderungen an beiden Schallwandlern entweder zu einer Erhöhung oder aber zu einer Verringerung der Frequenz des jeweils erzeugten Messignals führen. Dagegen sind die Änderungen der Frequenzen von Messsignalen, die von gegenüberliegend angeordneten Schallwandler in niederschlagsfreien Zeiträumen erzeugt werden, unterschiedlich groß oder sogar gegenläufig.

Um eine weitere Erhöhung der Genauigkeit einer Niederschlagsdetektion erzielen zu können ist gemäß einer weiteren Ausführungsform der Erfindung vorgesehen, Mittelwerte der Frequenz der von den Schallwandlern erzeugten Messsignale über ein Mittelungszeitraum, der bevorzugt 50 Sekunden beträgt, zu bilden und Standardabweichungen zu berechnen, die auf diesen Mittelwert bezogen sind.

In einer weiteren Ausgestaltung der Erfindung ist es denkbar, dass bei der Auswertung der aus den Frequenzen der von gegenüberliegenden Schallwandlern erzeugten Messsignale wenigstens zeitweise

- jeweils eine Standardabweichung $\sigma$ der von gegenüberliegenden Schallwandlern erzeugten Messsignale,
- eine Standardabweichung $\sigma_m$ der mittleren Frequenz der von gegenüberliegenden Schallwandlern erzeugten Messsignale,
- eine Standardabweichung $\sigma_d$ der halben Differenz der Frequenzen,
- ein aus $\sigma_d$ und $\sigma_m$ gebildeter Quotient q und
- ein unter Berücksichtigung der Standardabweichung $\sigma_m$ sowie des zuvor genannten Quotienten q, insbesondere durch Quotientenbildung, ermittelter Niederschlagsindikator $\sigma_r$

ermittelt wird. Bevorzugt werden hierbei folgende Rechenvorschriften verwendet:

| | |
|---|---|
| $\sigma(f_1)$ und $\sigma(f_2)$: | Standardabweichungen der Frequenzen, die von gegenüberliegend angeordneten Schallwandlern erzeugt werden; |
| $\sigma_m = \sigma(\ (f_1 + f_2)/2\ )$: | Standardabweichung der mittleren Frequenzen; |
| $\sigma_d = \sigma(\ (f_1 - f_2)/2\ )$: | Standardabweichung der halben Differenz der Frequenzen; |
| $q = \sigma_d / \sigma_d$: | Quotient; |

(fortgesetzt)

$\sigma_r = \sigma_m / (10 \cdot q + 0{,}5)$:     Niederschlagsindikator.

Hierbei wird bei der Rechenvorschrift zur Ermittlung des Niederschlagsindikators gemäß der hier erläuterten Ausführungsform ein Wert von 0,5 im Nenner ergänzt, um das Teilen durch Null (0) zu verhindern.

Von besonderem Vorteil ist es, die Größe des Niederschlagsindikators der Entscheidung, ob ein Niederschlagsereignis vorliegt, zugrunde zu legen.

Auf vorteilhafte Weise werden die Standardabweichung über ein gleitendes Zeitfenster ws berechnet. Langsame Frequenzänderungen, die sich über einen größeren Zeitraum erstrecken als schnelle, insbesondere über einen deutlich längeren Zeitraum als das festgelegte Zeitfenster ws verlaufen, werden auf diese Weise unterdrückt und bei der Auswertung der Messsignale zur Niederschlagsdetektion nicht berücksichtigt. Diese verhältnismäßig langsamen Frequenzänderungen können etwa durch Temperaturänderungen der Umgebung oder durch eine nach Beendigung eines Niederschlagsereignisses immer noch stationär auf einem Schallwandler aufliegende Wasserschicht bedingt sein. Vorzugsweise erfolgt somit eine Messignalauswertung stets nach Ablauf des gleitenden Zeitfensters ws und eine unabhängige Stichprobe steht erst dann zur Verfügung. Gemäß dieser Ausführungsform bestimmt die Länge des Zeitfensters ws somit die zeitliche Auflösung der Messungen. Vorzugsweise wird für die Dauer des Zeitfensters ws ein Zeitraum zwischen 45 und 55s, insbesondere von 50 s gewählt.

In einer weiteren besonderen Ausführungsform der Erfindung ist vorgesehen, die Frequenzen der Messsignale noch vor Ermittlung der Standardabweichungen der Frequenzen der von den gegenüberliegenden Schallwandlern erzeugten Messignale über ein gleitendes Mittelungszeitfenster der Länge wm zu mitteln und/oder wenigstens einen Medianwert zu ermitteln, um so Messwertrauschen zumindest zu verringern. Vorzugsweise wird ein gleitendes Mittelungszeitfenster wm der Länge 45 und 55s, insbesondere 50 s,

Durch die Festlegung und Nutzung des gleitenden Zeitfensters ws und des gleitenden Mittelungszeitfensters wm wird auf vorteilhafte Weise ein Bandpass mit der Mittenfrequenz

$$f_{mB} = 2/ (wm + ws)$$

definiert.

Auf vorteilhafte Weise werden die Messignale derart ausgewertet, dass ein stabiles Binärsignal mit den Werten 0 und 1 erzeugt wird, sodass anhand des Binärsignals eindeutig entscheidbar ist, ob ein Niederschlagsereignis vorhanden ist oder nicht. Insgesamt ist es von Bedeutung für das erfindungsgemäße Verfahren, dass ein geeigneter, einer Entscheidung, ob ein Niederschlagsereignis vorliegt, zugrunde zu legender Wert, wie etwa ein Niederschlagsindikator, festgelegt wird. Sofern über die Ermittlung der Standardabweichungen des Messignals, wie oben beschrieben, ein Niederschlagsindikator ermittelt wird, sieht eine spezielle Weiterbildung der Erfindung vor, dass ein Niederschlagsereignis detektiert wird, wenn der Niederschlagsindikator oberhalb eines Schwellwertes von 10-70 Hz insbesondere oberhalb von 60 Hz liegt. Die Wahl der Schwelle erfolgt bevorzugt in Abhängigkeit der jeweiligen Ausführungsform des Ultraschallanemometers. Auf vorteilhafte Weise wird sie emprisch ermittelt, da davon auszugehen ist, dass diese von der Eigenfrequenz und der Größe der Schallwandler abhängt. Der Schwellwert wird vorzugsweise auf einen Wert zwischen 4 und 300 Hz festgelegt, sofern die Durchmesser der Schallwandler zwischen 8 und 15 mm liegen.

Eine besondere Ausgestaltung der Erfindung sieht ferner vor, dass in einem Messintervall geprüft wird, wie oft der Niederschlagsindikator oberhalb des Schwellwertes liegt. In diesem Fall wird vorzugsweise dann auf das Vorliegen eines Niederschlagsereignisses geschlossen, sobald für mehr als die Hälfte der in dem Messintervall durchgeführten Messungen ein Niederschlagsindikator ermittelt wird, der oberhalb des Schwellwertes liegt.

Im Übrigen ist auf vorteilhafte Weise vorgesehen, für ein Messintervall einen Zeitraum von etwa einer Minute, insbesondere von genau einer Minute, zu wählen, in dem dann 600 Messungen durchgeführt werden. Gemäß dieser Ausführungsform wird somit eine Messfolge mit einer Frequenz von 10 Hz, durchgeführt, es ist aber wiederum denkbar, diese spezifisch an die Eigenschaften eines Messgeräts anzupassen. Weiterhin ist es von Vorteil, wenn die Information über das Vorliegen des Niederschlagsereignisses über einen Zeitraum von 3-6 Minuten, bevorzugt für etwa 5 Minuten, ab Erkennung des Niederschlagsereignisses in einem Speicher abgelegt wird und/oder auf sonstige Weise zwischengespeichert wird.

Die in der Auswerteeinheit auf der Grundlage der ausgewerteten Messignale erhaltene Information über das Vorliegen eines Niederschlagsereignisses, etwa in Form eines Binärsignals oder sonstigen Ergebnissignals, kann während eines Niederschlagsereignisses Unterbrechungen aufweisen, was auf die stochastische Natur des Messsignals zurückzuführen ist. Die vergleichsweise kleine Sensorfläche der Schallwandler, die bei Ultraschallwandlern oftmals kleiner als 1 cm$^2$ ist, wird von einem Niederschlagsteilchen, insbesondere einem Regentropfen, entweder getroffen oder nicht getroffen. Aus diesem Grund wird jeder Wert, der ein Niederschlagsereignis repräsentiert, vorzugsweise während eines Speicherzeitfensters festgehalten, das vorzugsweise eine Länge von 3 bis 6, insbesondere von 5 Minuten aufweist.

Neben einem Verfahren betrifft die Erfindung auch eine Vorrichtung zur Erfassung von Niederschlagsereignissen mit wenigstens zwei Schallwandlern, wobei es sich bei einer derartigen Vorrichtung vorzugsweise um ein sogenanntes Ultraschallanemometer handelt, das vielfach zur Ermittlung der Windgeschwindigkeit und Windrichtung eingesetzt wird und über wenigstens zwei Ultraschallwandler verfügt, zwischen denen eine Messstrecke aufgespannt wird. Die erfindungsgemäße Vorrichtung verfügt somit über wenigstens zwei Schallwandler, zwischen denen eine Messstrecke aufgespannt wird, wobei die Schallwandler eingerichtet sind, um jeweils abwechselnd entlang der Messstrecke Schallwellen auszusenden oder von der Messstrecke kommende Schallwellen zu empfangen und ein Messsignal zu erzeugen. Ferner ist eine Auswerteeinheit vorgesehen, die über eine Signalübertragungsstrecke mit den Schallwandlern verbunden ist und auf der Grundlage einer Eigenschaft des wenigstens einen Messsignals, das jeweils von den Schallwandlern erzeugt wird, eine Information über wenigstens einen Atmosphärenparameter zu erzeugen. Hierbei ist es bislang üblich, dass Messsignal unter Berücksichtigung der Laufzeit eines Schallsignals zwischen zwei Schallwandlern auszuwerten. Erfindungsgemäß ist die Vorrichtung derart weitergebildet worden, dass die Auswerteeinheit eingerichtet ist, um auf der Grundlage einer Änderung der Frequenzen der von gegenüberliegenden Schallwandern erzeugten Messsignale ein Niederschlagsereignis unter Berücksichtigung einer Größe der Frequenzänderungen der Messsignale und eines Vergleichs des Verlaufs der Frequenzänderungen zu detektieren. Vorzugsweise findet hierbei ein Vergleich der Frequenzänderungen der Messsignale, die vom ersten und vom zweiten Schallwandler erzeugt werden, statt.

In einer besonderen Ausführungsform der Erfindung ist die Auswerteeinheit eingerichtet, um das Auftreten eines Niederschlagsereignisses zu detektieren, sobald ein für die Größe der Frequenzänderung festgelegter Grenzwert überschritten und die Verläufe der Frequenzänderungen, also die zeitlichen Änderungen der Frequenzänderungen, der von den gegenüberliegenden Schallwandlern erzeugten Messsignale gleich, gleichlaufend und/oder mittlere Steigungen der Verläufe der Frequenzänderungen gleich sind. Die Auswerteeinheit ist hierbei derart eingerichtet, dass die jeweils während eines Messzeitraums vom ersten und von dem auf der gegenüberliegenden Seite der Messstrecke angeordneten zweiten Schallwandler erzeugten Messsignale hinsichtlich der Art bzw. des Verlaufs der Frequenzänderung verglichen werden. Sind die zeitlichen Änderungen der Frequenz gleich, gleichlaufend und oder mittlere Steigerungen der Verläufe der Frequenzänderung gleich, wird auf die Existenz eines Niederschlagsereignisses geschlossen und eine entsprechende Information, insbesondere in Form eines Ergebnissignals, bei dem es sich bevorzugt um ein Binärsignal handelt, ausgegeben.

Gemäß einer weiteren Ausführungsform Erfindung ist vorgesehen, dass der in der Auswerteeinheit berücksichtigte Grenzwert für die Größe der Frequenzänderung größer als 800 Hz besonders bevorzugt größer als 1 kHz im Vergleich, wobei dieser Wert bevorzugt über ein gleitendes Mittelungszeitfernster mit einer Länge von 45 bis 55 s, bevorzugt von 50 s, erfasst und die über das gleitende Mittelungszeitfenster gemessenen Werte der Frequenz der Messsignale gemittelt werden bzw. ein Meridianwert gebildet wird.

Gemäß einer speziellen Ausführungsform der Erfindung werden als Schallwandler Piezoschallwandler mit einer Eigenfrequenz von 58 kHz und einer 3 dB-Bandbreite von etwa 6 kHz verwendet.

Im Folgenden wird die Erfindung ohne Beschränkung des allgemeinen Erfindungsgedankens anhand spezieller Ausführungsbeispiele unter Bezugnahme auf die Figuren näher erläutern. Dabei zeigen:

Fig. 1: 1-Komponenten Ultraschallanemometer mit einer vertikalen Messstrecke zur Erfassung einer Windgeschwindigkeit;

Fig. 2: Beispielhafte Darstellung eines von einem Schallwandler erzeugten Messsignals;

Fig. 3: Darstellung des Verlaufs der Frequenzen der Messsignale, die von zwei gegenüber angeordneten Schallwandlern über einen Zeitraum von 8 Stunden erzeugt wurden;

Fig. 4: Darstellung des zeitlichen Verlaufs der Werte des in der Auswerteeinheit ermittelten Niederschlagsindikators zusammen mit der Regenrate, die mit Hilfe des oben genannten Regenradars aufgenommen wurde;

Fig. 5: Darstellung des die detektierten Niederschlagsergebnisse anzeigenden Binärsignals sowie der mit dem Regenradar aufgenommene Regenintensität und Regenmenge sowie

Fig. 6: Darstellung des die detektierten Niederschlagsergebnisse anzeigenden Binärsignals sowie der mit dem Regenradar aufgenommene Regenintensität und Regenmenge.

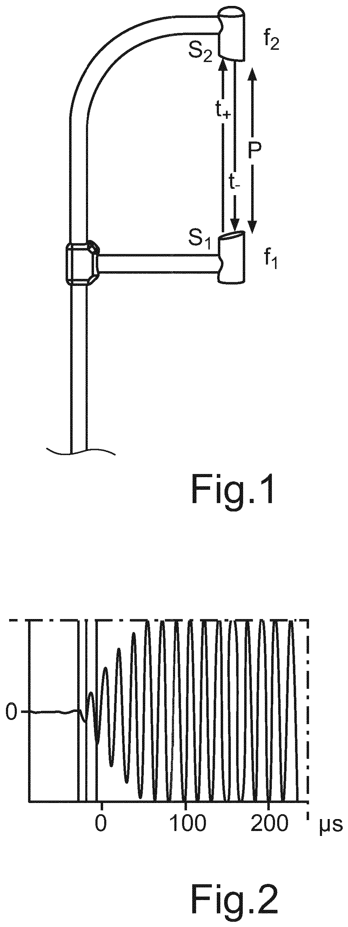

Figur 1 zeigt ein 1-Komponenten Ultraschallanemometer mit einer vertikalen Messstrecke zur Erfassung einer Windgeschwindigkeit. Zwischen einem ersten und einem gegenüberliegend angeordneten zweiten Schallwandler wird eine vertikale Messstrecke aufgespannt. Auch wenn die Erfindung anhand des in Fig. 1 gezeigten Ultraschallanemometers mit nur einer Messstrecke erläutert wird, ist die Erfindung nicht auf den Einsatz von Ultraschallanemometern mit einer bestimmten Anzahl von Messstrecken beschränkt. Vielmehr ist es denkbar, die Erfindung mit unterschiedlich ausgebildeten Schall- oder Ultraschallanemometern zu realisieren, insbesondere auch mit solchen, die über eine Mehrzahl von unterschiedlich ausgerichteten Messstrecken verfügen.

Die Bildung einer Wasserschicht auf einem der beiden oder auf beiden Schallwandlern führt zu Änderungen des Schwingungsverhaltens des benetzten Schallwandlers und damit des im Empfangsmodus jeweils erzeugten Messsignals. Schon die Bildung einer Wasserschicht auf einem der Schallwandler kann zu einer Änderung der Frequenzen der Messsignale beider Schallwandler führen. Bei Niederschlag, insbesondere bei Regen sind diese Frequenzänderungen stufen- oder impulsartig. Versuche haben allerdings gezeigt, dass die Frequenzänderungen nicht nur während Niederschlagsereignissen auftreten, sondern auch in niederschlagsfreien Zeiträumen. Hierzu wurde mit Hilfe von Messungen nachgewiesen, dass Frequenzänderung, die etwa durch Temperaturschwankungen oder Verdunstung von Wasserschichten auf den Schallwandlern verursacht werden, vergleichsweise langsam bzw. träge verlaufen und daher leicht von den sprunghaften, regeninduzierten Frequenzänderungen zu unterscheiden sind. Demgegenüber können bei der Auswertung der von den Schallwandlern erzeugten Messsignale schnelle Frequenzänderung, die vermutlich aufgrund von Turbulenzen verursacht werden, ein Problem darstellen, da das Risiko besteht, dass diese schnellen Änderungen mit regeninduzierten Frequenzänderung verwechselt werden. Um den Unterschied zwischen niederschlagsinduzierten und etwa turbulenzinduzierten Frequenzänderungen sicher detektieren zu können, werden erfindungsgemäß nicht nur die Größe einer Frequenzänderung, sondern auch die Art bzw. der zeitliche Verlauf der Frequenzänderungen der von gegenüberliegend in Bezug auf eine Messstrecke angeordneten Schallwandlern erzeugten Messsignale ausgewertet. Hierbei wird berücksichtigt, dass bei niederschlagsindizierte Frequenzänderungen der Messsignale, die von zu beiden Enden einer Messstrecke angeordneten Schallwandlern erzeugt werden, gleichlaufend sind.

Da erkannt wurde, dass demgegenüber bei turbulenzinduzierten Änderungen der Frequenzen der von gegenüberliegend zu einer Messstrecke angeordneten Schallwandlern erzeugten Messsignale die Frequenzverläufe unterschiedlich oder sogar gegenläufig sind, wird dieses Unterscheidungskriterium gemäß der hier beschriebenen Ausführungsform genutzt, um eine zuverlässige Detektion von Niederschlagsereignissen zu verwirklichen.

Das in Fig.1 gezeigte Ultraschallanemometer verfügt über zwei zu beiden Enden der Messstrecke angeordnete Schallwandler mit einer Eigenfrequenz $f_0$ von 58 kHz und einer 3-dB- Bandbreite von etwa 6 kHz. Der Durchmesser der Schallmembranen der Schallwandler beträgt 14 mm und der Neigungswinkel der Scheinmembranoberfläche gegenüber einer Horizontalebene etwa 20°. Die Streckenlänge der zwischen den beiden Schallwandlern aufgespannten Messstrecke beträgt 150 mm, wobei Messungen mit einer Frequenz von 10 Hz durchgeführt werden. Hierbei werden die Schallwandler im Sendebetrieb jeweils mit einem etwa 10 $\mu$s langen Impuls von 180 V über den Piezoeffekt zu Schwingungen angeregt. Das auf diese Weise erzeugte Schallsignal trifft auf den Schallwandler auf der gegenüberliegenden Seite der Messstrecke auf, sodass dieser zu einer erzwungenen Schwingung angeregt wird und verursacht durch den inversen Piezoeffekt ein elektrisches Messsignal erzeugt. Dieses Messsignal wird verstärkt und zur weiteren Verarbeitung und Auswertung über eine Datenübertragungsstrecke, die drahtlos oder drahtgebunden ausgeführt sein kann an eine Auswerteeinheit übertragen. In der Auswerteeinheit wird unter Berücksichtigung der von den beiden Schallwandlern erzeugten Messsignale detektiert, ob ein Niederschlagsereignis vorliegt, und ein als Ergebnissignal ein digitales Binärsignal erzeugt und ausgegeben, dessen jeweiliger Wert angibt, ob ein Niederschlagsereignis vorliegt oder nicht.

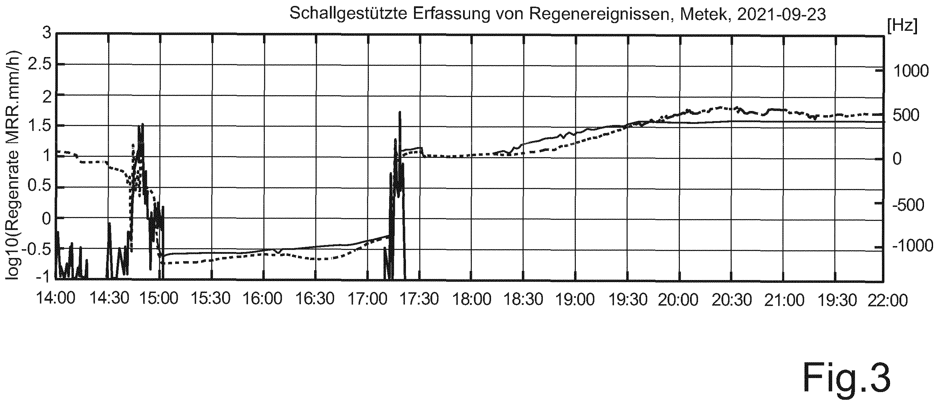

Fig. 2 zeigt ein Beispiel für ein vom ersten, unteren Schallwandler S1 erzeugtes Messsignal. Die Frequenz $f_1$ des Messsignals wird aus der Zeit von zehn Schwingungsperioden T abgeleitet. Im Weiteren zeigt Fig. 3 den Verlauf der Frequenzen der Messsignale, die vom ersten, unteren Schallwandler S1 und vom zweiten, oberen Schaltwandler S2 über einen Zeitraum von 8 Stunden erzeugt wurden. Gemäß dem hier beschriebenen Ausführungsbeispiele traten in dem Zeitraum zwei Niederschlagsereignisse in Form von Regenschauern auf, nämlich ein erster Regenschauer von 14:30 Uhr bis 15:00 Uhr und ein zweiter Regenschauer von 17:15 Uhr bis 17:20 Uhr.

Zur Validierung der mit Hilfe des Ultraschallanemometers und der daran angebundenen Auswerteeinheit gewonnenen Ergebnisse wurde ein Regenradar MRR-Pro der Firma METEK GmbH mit einer zeitlichen Auflösung von 10 s verwendet. Das mit Hilfe des Regenradars erzeugte Signal ist ebenfalls in Fig. 3 dargestellt.

Zunächst ist eindeutig zu erkennen, dass die von den beiden Schallwandlern S1, S2 erzeugten Messignale in den Zeiträumen, in denen auch das Regenradar das Vorhandensein eines Niederschlagsereignisses angibt, deutliche Frequenzänderungen aufweisen. Die Messignale beider Schallwandler S1, S2 zeigen während der Regenschauer eine stufenartige Frequenzänderung von etwa 1 kHz, wobei der erste Regenschauer zu einer Absenkung der Frequenz und der zweite Regenschauer zu einer Anhebung der Frequenz der Messsignale um etwa den gleichen Betrag führt.

In diesem Zusammenhang wird davon ausgegangen, dass die Frequenzabsenkung während des ersten Regenschauers auf die Bildung einer Wasserschicht auf dem ersten, unteren Schallwandler S1 oder einem anhängenden Tropfen am zweiten, oberen Schallwandler zurückzuführen ist. Die schwingende Masse wird hierdurch bei etwa gleichbleibenden Rückstellkräften vergrößert, was zu einer Absenkung der Resonanzfrequenz führt.

Nach Beendigung eines Regenschauers ändern sich die Frequenzen der Messignale nur wenig und es ist zu vermuten, dass der leichte Anstieg der Frequenz auf eine Verdunstung der Wasserschicht zurückzuführen ist. Der zweite Regenschauer führt dann zu einem Abwaschen der Wasserschicht von den Oberflächen der Schallwandler, sodass die Eigenfrequenz in etwa wieder den ursprünglichen Wert annimmt.

Da es schwierig erscheint anhand des Verlaufs der Frequenz der von den Schallwandlern erzeugten Messsignale, insbesondere anhand des Verlaufs der mittleren Frequenz, zuverlässig Niederschlagsereignisse detektieren zu können, werden in der Auswerteeinheit erfindungsgemäß nicht Frequenzen selbst, sondern die Feinstrukturen ihrer zeitlichen Änderungen zur Erkennung von Niederschlagsereignissen verwendet. Diese Auswertung erfolgt gemäß der im Weiteren beschriebenen, bevorzugten Ausführungsform der Erfindung unter Berücksichtigung der Standardabweichungen der Frequenzen der Messsignale.

Zunächst wird in einer Auswerteeinheit auf geeignete Weise die Trennschärfe der Erkennung von Niederschlagsereignissen dadurch erhöht, dass die Frequenzänderungen am ersten, unteren Schallwandler S1 sowie am zweiten, oberen Schallwandler addiert oder gemittelt werden. Auf diese Weise werden niederschlagsinduzierte Anteile an einer Frequenzänderung nicht vermindert, während andere, schnelle Änderungen wegen der Gegenläufigkeit der Frequenzänderung eliminiert oder zumindest abgeschwächt werden.

Um eine zuverlässige Niederschlagsdetektion, insbesondere Regendetektion, sicherzustellen, wird in der Auswerteeinheit die folgende Signalverarbeitung ausgeführt.

Hierbei gilt:

| | |
|---|---|
| $\sigma(f_1)$ und $\sigma(f_2)$: | Standardabweichungen der Frequenzen, die von gegenüberliegend angeordneten Schallwandlern erzeugt werden; |
| $\sigma(f_1)$ und $\sigma(f_2)$: | Standardabweichungen der Frequenzen, die von gegenüberliegend angeordneten Schallwandlern erzeugt werden; |
| $\sigma_m = \sigma(\,(f_1 + f_2)/2\,)$: | Standardabweichung der mittleren Frequenzen |
| $\sigma_d = \sigma(\,(f_1 - f_2)/2\,)$: | Standardabweichung der halben Differenz der Frequenzen; |
| $q = \sigma_d / \sigma_d$: | Quotient; |
| $\sigma_r = \sigma_m / (10 \cdot q + 0,5)$: | Niederschlagsindikator. |

Hierbei wird bei der Rechenvorschrift zur Ermittlung des Niederschlagsindikators gemäß der beschriebenen Ausführungsform ein Wert von 0,5 im Nenner ergänzt, um das Teilen durch Null (0) zu verhindern. Basierend auf der Größe des Niederschlagsindikators wird letztendlich ein Ergebnissignal, hier ein Binärsignal, erzeugt, dem eine Information darüber, ob ein Niederschlagsereignis vorliegt oder nicht, entnehmbar ist.

Die einzelnen Standardabweichungen der Frequenzen werden über ein gleitendes Zeitfenster ws ermittelt. Auf diese Weise werden langsame Frequenzänderung, die sich über einen Zeitraum erstrecken, der deutlich länger als das gleitende Zeitfenster ws ist, unterdrückt. Diese langsamen Frequenzänderungen werden beispielsweise durch Temperaturveränderung oder durch eine nach Beendigung eines Regenereignissen stationär aufliegende Wasserschicht und die hieraus resultierende Verdunstung verursacht. Aufgrund des gewählten Vorgehens steht eine unabhängige Stichprobe erst nach Ablauf der für die Dauer des gleitentenden Zeitfensters ws festgelegten Zeitspanne zur Verfügung. Somit bestimmt die Länge des gleitenden Zeitfensters die zeitliche Auflösung der Messung. Gemäß dem hier beschriebenen Ausführungsbeispiel beträgt die Länge des gleitenden Zeitfensters ws 50 s.

Der Zeitraum, in dem sich die Frequenzen der Messsignale niederschlagsbedingt ändern, ist derart lang, dass für die vorgenommenen Messungen zur Niederschlagsdetektion die üblicherweise bei den bekannten Ultraschallanemometern zur Verfügung stehenden zeitlichen Auflösungen vollkommen ausreichend sind und nicht in vollem Umfang benötigt werden.

Um im Übrigen ein Messwertrauschen zu vermindern, werden die Frequenzen der Messsignale der beiden Schallwandler vor Berechnung ihrer Standardabweichungen $\sigma(f_1)$, $\sigma(f_2)$: über ein gleitendes Mittelungszeitfenster wm gemittelt bzw. der Medianwert bestimmt. Gemäß dem hier beschriebenen Ausführungsbeispiel wurde für die Länge des Mittelungszeitraums ebenfalls eine Zeitspanne von 50 s gewählt. Aufgrund der Verwendung des zuvor beschriebenen Zeitfensters ws und des Mittelungszeitfensters wm wird ein Bandpassfilter mit der Mittenfrequenz $f_{mB} = 2/(wm + ws)$ definiert.

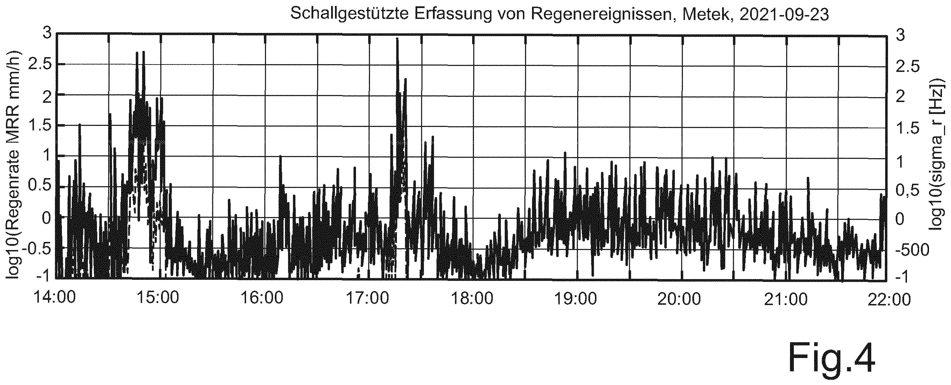

Fig. 4 zeigt ergänzend zu Fig. 3 den zeitlichen Verlauf der Werte des in der Auswerteeinheit ermittelten Niederschlagsindikators zusammen mit der Regenrate, die mit Hilfe des oben genannten Regenradars aufgenommen wurde. Auf der Grundlage der ermittelten Werte des Niederschlagsindikators wird schließlich ein stabiles Binärsignal mit den Werten 1 = Niederschlagsereignis und 0 = kein Niederschlagsereignis erzeugt. Bei den gemäß dem beschriebenen Ausführungsbeispiel durchgeführten Auswertungen hat sich gezeigt, dass die Festlegung eines Grenzwerts, bei dem auf das Vorhandensein eines Niederschlagsereignisses erkannt wird, geeignet erscheint, der in einem Bereich von 10 bis 50 Hz liegt. Besonders geeignet erscheint die Festlegung eines Grenzwerts, der in einem Bereich zwischen 15 und 25 Hz liegt.

Bei eingehenden Versuchen wurde festgestellt, dass es trotz der zuvor beschriebenen Filtermaßnahmen zu einzelnen Grenzwertüberschreitungen kommen kann. Aus diesem Grund wird während der Auswertung geprüft, ob im Umfeld der ermittelten Grenzwertüberschreitungen weitere Grenzwertüberschreitungen auftreten. Hierfür wird in der Auswerteeinheit ein Umgebungsintervall von 1 Minute festgelegt. Dies bedeutet bei der gemäß dem beschriebenen Ausführungsbeispiele gewählten Messfolge von 10 Hz, dass dieses Umgebungsintervall über 600 Messwerte verfügt. In Bezug auf einen Messpunkt, wird im Weiteren nur dann nach wie vor auf das Vorhandensein eines Niederschlagsereignisses geschlossen, wenn ein festgelegter Anteil, vorzugsweise 50 %, der umgebenden Messungen ebenfalls zu dem Ergebnis kommt, dass ein Niederschlagsereignis vorliegt.

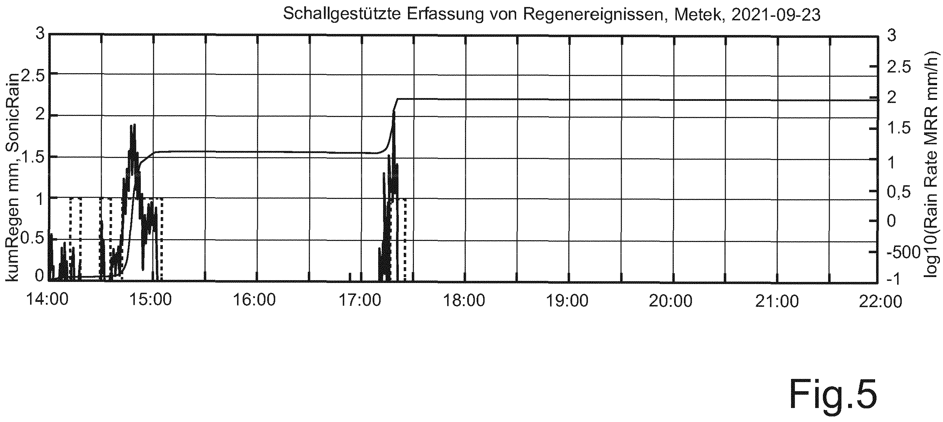

Die auf diese Weise erzeugte binäre Zeitreihe zeigt im Fall von Niederschlagsereignissen häufige Unterbrechungen, was auf die unvermeidlich stochastische Natur des Messignals zurückzuführen ist. Aufgrund der vergleichsweise kleinen Oberfläche der Schallwandler, die kleiner als 1 cm $^2$ ist, wird diese entweder von einem Niederschlagsteilchen, insbesondere einem Regentropfen während eines Regenschauers, getroffen oder nicht. Aus diesem Grund ist vorgesehen, dass in der Auswerteeinheit in einem Memory-Speicher die Information über ein erkanntes Niederschlagsereignis über einen Memoryzeitraum, der auf 5 Minuten festgelegt ist, festgehalten wird. Eine auf diese Weise ermittelte binäre Zeitreihe ist in Fig. 5 dargestellt. Zusätzlich sind die Regenintensität sowie das zeitliche Integral dieser Funktion, also die kumulierte Regenmenge, die mit dem oben genannten Regenradar ermittelt wurden, dargestellt. Diese gibt einen anschaulichen Eindruck des jeweiligen Regenereignis. Wie die Darstellung zeigt, sind während des ersten erfindungsgemäß detektierten Regenschauers 1,5 mm und während des zweiten Regenschauers 5 mm Niederschlag gefallen. Die Auswertung in Fig. 5 verdeutlicht, dass beide Regenereignisse eindeutig erkannt wurden. Die beiden kurzen Detektionen vor dem ersten Regenschauer in einem Zeitraum von 14:10 Uhr bis 14:30 Uhr sind ebenfalls mit Regen korreliert, der allerdings sehr schwach war und nur zu einer kumulierten Regenmenge von weniger als 0,1 mm führte.

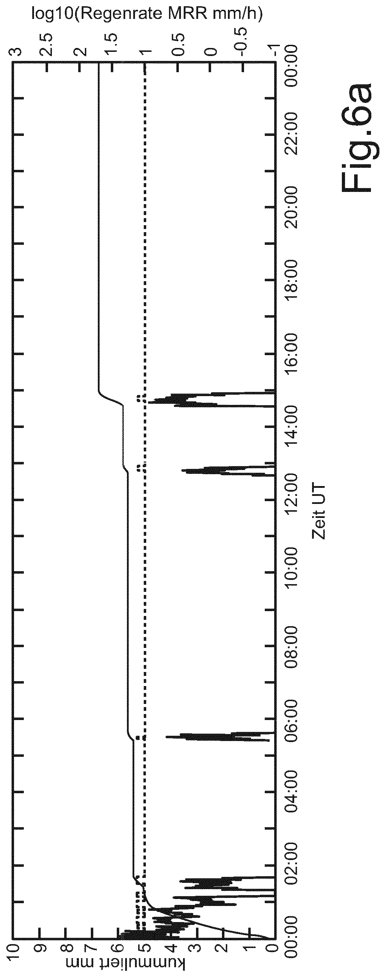

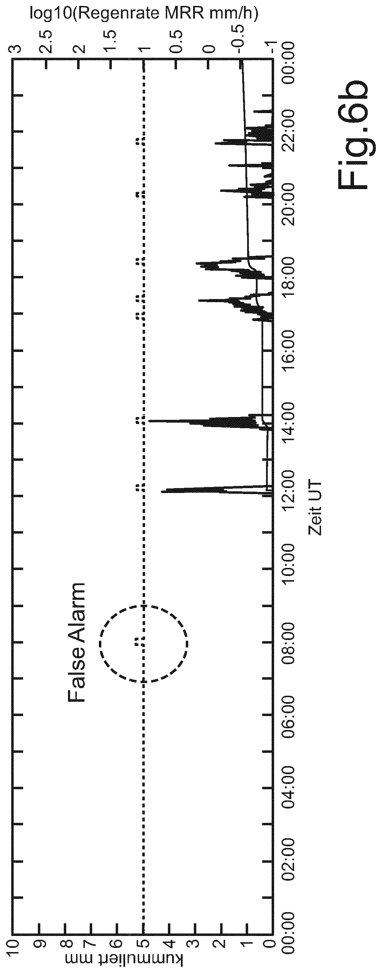

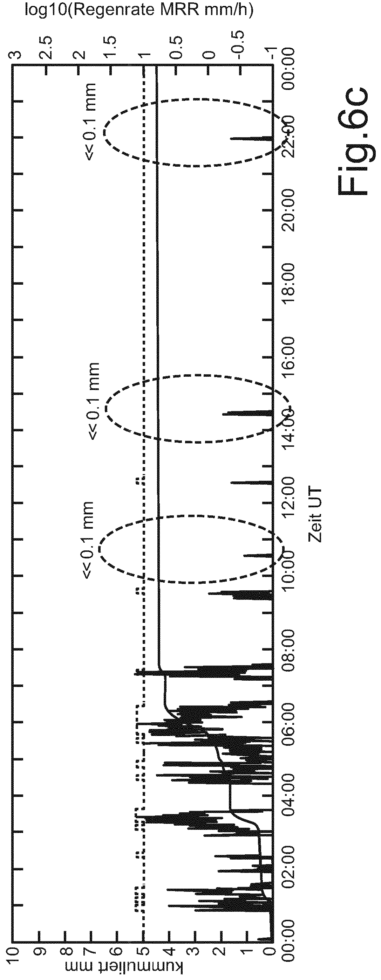

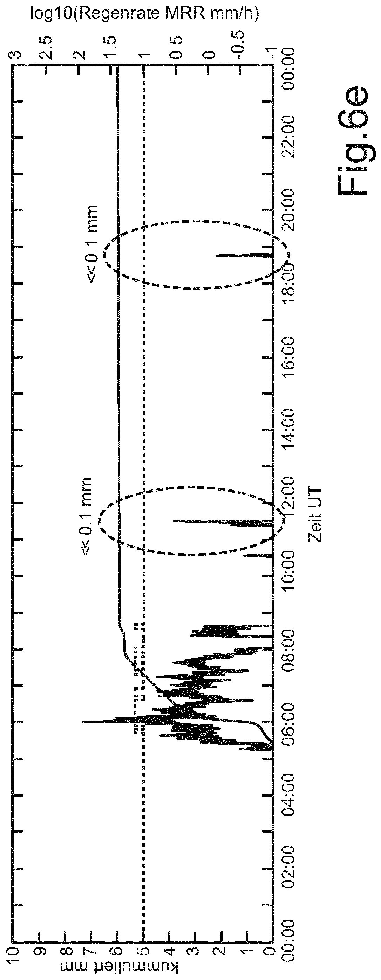

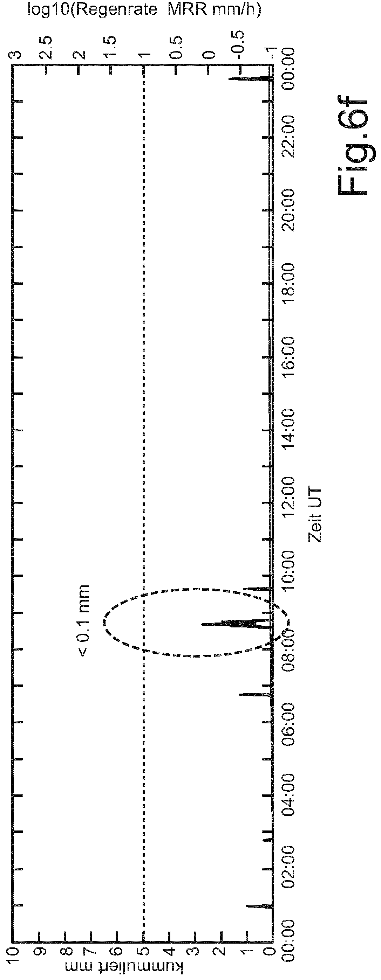

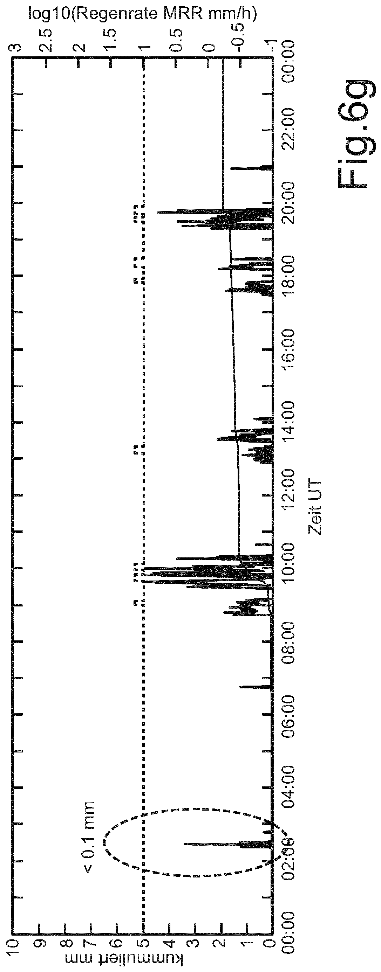

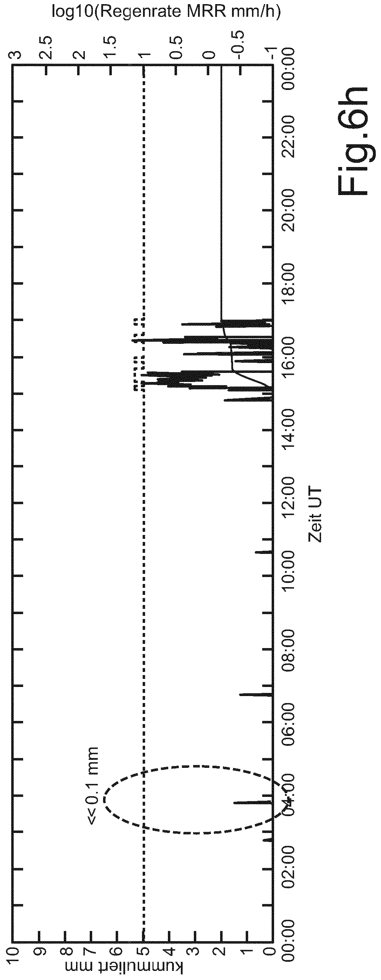

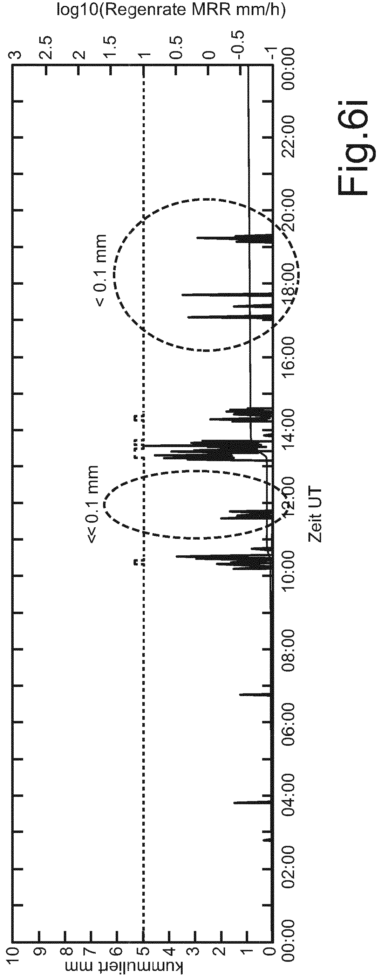

Darüber hinaus enthält Fig. 6 in den Darstellungen 6a) bis 6i) die gleichen Informationen wie Fig. 5, nämlich das die detektierten Niederschlagsergebnisse anzeigende Binärsignal sowie die mit dem Regenradar aufgenommene Regenintensität und Regenmenge.

Die Messungen wurden über einen Beobachtungszeitraum von 8 × 24 Stunden durchgeführt, in denen Regenereignisse mit einer kumulierten Regenmenge von insgesamt 23 mm beobachtet wurden. Deutlich zu erkennen ist in den Darstellungen der Fig. 6, dass Niederschlagsereignisse mit einer kumulierten Regenmenge die größer als 0,1 mm war, zuverlässig detektiert wurden. Lediglich Fig. 6b) zeigt eine Niederschlagsdetektion, obwohl es nicht regnete. Sofern Niederschlagsereignisse nicht erkannt wurden, handelte es sich um Regenschauer mit einer kumulierten Regenmenge von weniger als 0,1 mm.

**Patentansprüche**

1. Verfahren zur Erfassung von Niederschlagsereignissen, bei dem von zwei auf gegenüberliegenden Seiten einer Messstrecke angeordneten Schallwandlern (S1, S2) jeweils abwechselnd während eines Sendezeitraums Ultraschallwellen zumindest bereichsweise entlang der Messstrecke derart emittiert werden, dass in einem ersten Sendezeitraum einer erster der Schallwandler (S1) Ultraschallwellen emittiert während der gegenüberliegende zweite Schallwandler (S2) die ausgesandten Ultraschallwallen zumindest teilweise empfängt und in wenigstens einem zweiten Sendezeitraum der zweite Schallwandler (S2) Ultraschallwellen emittiert, während der erste Schallwandler (S1) die ausgesandten Ultraschallwellen zumindest teilweise empfängt, wobei die Schallwandler (S1, S2) jeweils während des Empfangs der Ultraschallwellen in Abhängigkeit einer Eigenschaft der empfangenen Ultraschallwellen ein Messsignal erzeugen, und bei dem die von den Schallwandlern (S1, S2) erzeugten Messsignale über eine Datenübertragungsstrecke an eine Auswerteeinheit übertragen werden, die auf der Grundlage einer Eigenschaft der Messsignale eine Information über wenigstens einen Atmosphärenparameter erzeugt, **dadurch gekennzeichnet, dass** die Auswerteeinheit Änderungen der Frequenz der von den Schallwandlern (S1, S2) übertragenen Messsignale detektiert und auswertet eine Größe und einen Verlauf der Frequenzen während der Frequenzänderungen erfasst und in Abhängigkeit der Größe der Frequenzänderungen sowie eines Vergleichs der Frequenzverläufe während der Frequenzänderung ein Niederschlagsereignis erkennt und die Information über das Auftreten des Niederschlagsereignisses ausgibt.

2. Verfahren nach Anspruch 1,
**dadurch gekennzeichnet, dass** beim Auswerten der Messsignale das Auftreten eines Niederschlagsereignisses erkannt wird, wenn ein für die Größe der Frequenzänderungen festgelegter Grenzwert überschritten wird und die Verläufe der Frequenzänderungen der von den gegenüberliegenden Schallwandlern erzeugten Messsignale gleich, gleichlaufend und/oder mittlere Steigungen der Verläufe der Frequenzänderungen gleich sind.

3. Verfahren nach Anspruch 1 oder 2,
**dadurch gekennzeichnet, dass** beim Auswerten der Messsignale die Frequenzen der von den gegenüberliegenden Schallwandlern in einem Messzeitraum erzeugten Messsignale wenigstens zeitweise addiert und/oder daraus Mittelwerte gebildet werden.

4. Verfahren nach Anspruch 3,

**dadurch gekennzeichnet, dass** die Mittelwerte der aufgenommenen Frequenzen der Messignale über einen Mittelungszeitraum ($w_m$), der bevorzugt 50 s beträgt, gebildet werden.

5. Verfahren nach einem der vorangehenden Ansprüche,

    **dadurch gekennzeichnet, dass** bei der Auswertung der Messignale

        - aus den Frequenzen der von gegenüberliegenden Schallwandlern erzeugten Messignale wenigstens zwei Standardabweichungen,
        - eine Standardabweichung $\sigma_m$ der mittleren Frequenz der von gegenüberliegenden Schallwandlern erzeugten Messignale,
        - eine Standardabweichung $\sigma_d$ der halben Differenz der Frequenzen,
        - ein aus $\sigma_d$ und $\sigma_m$ gebildeter Quotient q und
        - ein unter Berücksichtigung der Standardabweichung $\sigma_m$ sowie des zuvor genannten Quotienten q, insbesondere durch Quotientenbildung, ermittelter Niederschlagsindikator $\sigma_r$

    gebildet werden.

6. Verfahren nach Anspruch 5,
    **dadurch gekennzeichnet, dass** eine Überschreitung eines Schwellwerts für den Regenindikator für die Entscheidung, ob ein Niederschlagsereignis vorliegt, verwendet wird.

7. Verfahren nach Anspruch 5 oder 6,
    **dadurch gekennzeichnet, dass** auf das Vorliegen eines Niederschlagsereignisses entschieden wird, wenn ein Wert für den Regenindikator einen Schwellwert von 10 bis 70 Hz, insbesondere von 60 Hz übersteigt.

8. Verfahren nach Anspruch 7,
    **dadurch gekennzeichnet, dass** in einem Messintervall geprüft wird, wie oft der Regenindikator oberhalb des Schwellwerts liegt und sobald mehr als die Hälfte der in dem Messintervall durchgeführten Messungen ergeben, dass der Regenindikator oberhalb des Schwellwerts liegt, auf das Vorliegen eines Niederschlagsereignisses geschlossen wird.

9. Verfahren nach einem der Ansprüche 5 bis 8,
    **dadurch gekennzeichnet, dass** die Standardabweichungen bezogen auf einen festgelegten Zeitraum ($w_s$), der bevorzugt 50 s beträgt, ermittelt werden.

10. Verfahren nach Anspruch 8,
    **dadurch gekennzeichnet, dass** in einem Messintervall von einer Minute 600 Messungen durchgeführt werden.

11. Verfahren nach einem der vorangehenden Ansprüche,
    **dadurch gekennzeichnet, dass** die Information über das Vorliegen des Niederschlagsereignisses über einen Zeitraum von 3 bis 6 min, bevorzugt für etwa 5 min, ab Erkennung des Niederschlagsereignisses in einem Speicher abgelegt wird und/oder ausgegeben wird.

12. Vorrichtung zur Erfassung von Niederschlagsereignissen mit wenigstens zwei Schallwandlern (S1, S2), zwischen denen eine Messstrecke aufgespannt ist und von denen abwechselnd jeweils ein Schallwandler (S1, S2) eingerichtet ist, um Ultraschallwellen entlang der Messstrecke zu emittieren, während der gegenüberliegende Schallwandler (S1, S2) eingerichtet ist, um ein Messignal zu erzeugen, das für die nach Fortpflanzung über die Messstrecke auftreffenden Ultraschallwellen spezifisch ist, und mit einer Auswerteeinheit, die über eine Signalübertragungsstrecke mit den Schallwandlern verbunden ist und auf der Grundlage einer Frequenz des wenigstens einen Messignals eine Information über wenigstens einen Atmosphärenparameter erzeugt,
    **dadurch gekennzeichnet, dass** die Auswerteeinheit eingerichtet ist, um auf der Grundlage einer Änderung der Frequenzen der von den gegenüberliegenden Schallwandlern erzeugten Messignale ein Niederschlagsereignis unter Berücksichtigung einer Größe der Frequenzänderungen der Messignale und eines Vergleichs der Frequenzverläufe der während der Frequenzänderung erzeugten Messignale zu detektieren.

13. Vorrichtung nach Anspruch 12,
    **dadurch gekennzeichnet, dass** die Auswerteeinheit eingerichtet ist, das Auftreten eines Niederschlagsereignisses zu detektieren, wenn ein für die Größe der Frequenzänderungen festgelegter Grenzwert überschritten und die Verläufe der Frequenzänderungen der von den gegenüberliegenden Schallwandlern erzeugten Messignale gleich, gleichlaufend und/oder mittlere Steigungen der Verläufe der Frequenzänderungen gleich sind.

14. Vorrichtung nach Anspruch 13,
dadurch, dass der in der Auswerteeinheit berücksichtigte Grenzwert für die Größe der Frequenzänderung größer als 800 Hz, bevorzugt größer als 1 kHz ist.

15. Vorrichtung nach einem der Ansprüche 12 bis 14,
**dadurch gekennzeichnet, dass** die Schallwandler als Piezoschallwandler mit einer Eigenfrequenz von 58 kHz und einer 3 db Bandbreite von etwa 6 kHz ausgeführt sind.

**Claims**

1. A method for recording precipitation events, in which two sound transducers (S1, S2) arranged on opposite sides of a measuring section each alternately emit ultrasonic waves along the measuring section, at least in certain areas, during a transmission period in such a way that, in a first transmission period, a first of the sound transducers (S1) emits ultrasonic waves, while the opposite second sound transducer (S2) receives the emitted ultrasonic waves, at least partially, and, in at least one second transmission period, the second sound transducer (S2) emits ultrasonic waves, while the first sound transducer (S1) receives the emitted ultrasonic waves, at least partially, wherein the sound transducers (S1, S2) each generate a measurement signal during reception of the ultrasonic waves depending on a property of the received ultrasonic waves, and in which the measurement signals generated by the sound transducers (S1, S2) are transmitted to an evaluation unit via a data transmission path, which evaluation unit generates information about at least one atmospheric parameter on the basis of a property of the measurement signals,
**characterized in that** the evaluation unit detects and evaluates changes in the frequency of the measurement signals transmitted by the sound transducers (S1, S2), records a magnitude and a response curve of the frequencies during the changes in frequency, and detects a precipitation event depending on the magnitude of the changes in frequency as well as a comparison of the frequency response curves during the change in frequency, and outputs the information about the occurrence of the precipitation event.

2. The method according to claim 1,
**characterized in that**, upon evaluation of the measurement signals, the occurrence of a precipitation event is detected, if a limit value defined for the magnitude of the changes in frequency is exceeded and the response curves of the changes in frequency of the measurement signals generated by the opposite sound transducers are identical, synchronous and/or mean gradients of the response curves of the changes in frequency are identical.

3. The method according to claim 1 or 2,
**characterized in that**, upon evaluation of the measurement signals, the frequencies of the measurement signals generated by the opposite sound transducers in one measurement period are, at least at times, added and/or mean values are formed therefrom.

4. The method according to claim 3,
**characterized in that** the mean values of the recorded frequencies of the measurement signals are formed over an averaging period ($w_m$), which preferably lasts 50 s.

5. The method according to any one of the preceding claims,
**characterized in that**, upon evaluation of the measurement signals,

- at least two standard deviations are formed from the frequencies of the measurement signals generated by opposite sound transducers,
- a standard deviation $\sigma_m$ of the mean frequency of the measurement signals generated by opposite sound transducers is formed,
- a standard deviation $\sigma_d$ of half the difference of the frequencies is formed,
- a quotient q formed from $\sigma_d$ and $\sigma_m$ is formed, and
- a precipitation indicator $\sigma_r$ determined under consideration of the standard deviation $\sigma_m$ as well as the aforementioned quotient q is formed, in particular by quotient formation.

6. The method according to claim 5,
**characterized in that** exceeding of a threshold value for the rain indicator is used to decide whether a precipitation event is present.

7. The method according to claim 5 or 6,
**characterized in that** a decision is made as to the presence of a precipitation event, if a value for the rain indicator exceeds a threshold value of 10 to 70 Hz, in particular 60 Hz.

8. The method according to claim 7,
**characterized in that** it is checked in a measuring interval, how often the rain indicator lies above the threshold value, and as soon as more than half of the measurements performed in the measuring interval result in the rain indicator lying above the threshold value, the presence of a precipitation event is concluded.

9. The method according to any one of claims 5 to 8,
**characterized in that** the standard deviations are determined relative to a defined period of time ($w_s$), which preferably lasts 50 s.

10. The method according to claim 8,
**characterized in that** 600 measurements are performed in a measuring interval of one minute.

11. The method according to any one of the preceding claims,
**characterized in that** the information about the presence of the precipitation event over a period from 3 to 6 min, preferably for about 5 min, from detection of the precipitation event is stored in a memory and/or output.

12. A device for recording precipitation events having at least two sound transducers (S1, S2), between which a measuring section extends, and of which alternately respectively one sound transducer (S1, S2) is configured to emit ultrasonic waves along the measuring section, while the opposite sound transducer (S1, S2) is configured to generate a measurement signal, which is specific for the impinging ultrasonic waves following propagation across the measuring section, and having an evaluation unit, which is connected to the sound transducers via a signal transmission path and generates information about at least one atmospheric parameter on the basis of a frequency of the at least one measurement signal,
**characterized in that** the evaluation unit is configured to detect a precipitation event on the basis of a change in the frequencies of the measurement signals generated by the opposite sound transducers, considering a magnitude of the changes in frequency of the measurement signals and a comparison of the frequency response curves of the measurement signals generated during the change in frequency.

13. The device according to claim 12,
**characterized in that** the evaluation unit is configured to detect the occurrence of a precipitation event, if a limit value defined for the magnitude of the changes in frequency is exceeded and the response curves of the changes in frequency of the measurement signals generated by the opposite sound transducers are identical, synchronous and/or mean gradients of the response curves of the changes in frequency are identical.

14. The device according to claim 13,
**characterized in that** the limit value for the magnitude of the change in frequency considered in the evaluation unit is greater than 800 Hz, preferably greater than 1 kHz.

15. The device according to any one of claims 12 to 14,
**characterized in that** the sound transducers are designed as piezoelectric sound transducers with a natural frequency of 58 kHz and a 3 dB bandwidth of about 6 kHz.

**Revendications**

1. Procédé pour détecter des précipitations, dans lequel deux transducteurs acoustiques (S1, S2) disposés sur des côtés opposés d'une section de mesure émettent alternativement, pendant une période d'émission, des ondes ultrasonores au moins par zones le long de ladite section de mesure, de telle sorte que, dans une première période d'émission, un premier desdits transducteurs acoustiques (S1) émet des ondes ultrasonores, tandis que le deuxième transducteur acoustique (S2) opposé reçoit au moins en partie les ondes ultrasonores émises et, pendant au moins une deuxième période d'émission, ledit deuxième transducteur acoustique (S2) émet des ondes ultrasonores, tandis que ledit premier transducteur acoustique (S1) reçoit au moins en partie les ondes ultrasonores émises, lesdits transducteurs acoustiques (S1, S2) générant chacun, pendant la réception des ondes ultrasonores, un signal de mesure en fonction d'une caractéristique des ondes ultrasonores reçues, et dans lequel les signaux de mesure générés par lesdits transducteurs acoustiques (S1, S2) sont transmis via une liaison de transmission de données à une unité d'évaluation qui génère, sur la base d'une caractéristique desdits signaux de mesure, une information sur au moins un paramètre atmosphérique, **caractérisé en ce que** ladite unité d'évaluation détecte et évalue les variations de fréquence des signaux de mesure transmis par lesdits transducteurs acoustiques (S1, S2), détecte et évalue une amplitude et une courbe de réponse des fréquences pendant les variations de fréquence et, en fonction de l'amplitude des variations de fréquence et d'une comparaison des courbes de réponse des fréquences pendant la variation de fréquence, détecte un événement de précipitation et transmet l'information relative à l'apparition de l'événement de précipitation.

2. Procédé selon la revendication 1,
**caractérisé en ce que**, lors de l'évaluation des signaux de mesure, l'apparition d'un événement de précipitation est détectée lorsqu'une valeur limite définie pour l'amplitude des variations de fréquence est dépassée et que les courbes de réponse des variations de fréquence des signaux de mesure générés par lesdits transducteurs acoustiques opposés sont identiques, parallèles et/ou que les gradients moyens des courbes de réponse des variations de fréquence sont identiques.

3. Procédé selon la revendication 1 ou 2,
**caractérisé en ce que**, lors de l'évaluation des signaux de mesure, les fréquences des signaux de mesure générés par les transducteurs acoustiques opposés pendant une période de mesure sont additionnées au moins temporairement et/ou des valeurs moyennes sont formées à partir de celles-ci.

4. Procédé selon la revendication 3,
**caractérisé en ce que** les valeurs moyennes des fréquences enregistrées des signaux de mesure sont formées sur une période de calcul de la moyenne ($w_m$), qui est de préférence de 50 s.

5. Procédé selon l'une des revendications précédentes,
**caractérisé en ce que**, lors de l'évaluation des signaux de mesure

- à partir des fréquences des signaux de mesure générés par des transducteurs acoustiques opposés, au moins deux écarts types,
- un écart type $\sigma_m$ de la fréquence moyenne des signaux de mesure générés par des transducteurs acoustiques opposés,
- un écart type $\sigma_d$ de la moitié de la différence des fréquences,
- un quotient q formé à partir de $\sigma_d$ et $\sigma_m$ et
- un indicateur de précipitation $\sigma_{(r)}$ déterminé en tenant compte dudit écart type $\sigma_m$ et dudit quotient q, notamment par formation d'un quotient.

6. Procédé selon la revendication 5,
**caractérisé en ce qu'**un dépassement d'une valeur seuil pour l'indicateur de pluie est utilisé pour déterminer s'il y a un événement de précipitation.

7. Procédé selon la revendication 5 ou 6,
**caractérisé en ce que** la présence d'un événement de précipitation est déterminée lorsqu'une valeur dudit indicateur de pluie dépasse une valeur seuil comprise entre 10 et 70 Hz, en particulier 60 Hz.

8. Procédé selon la revendication 7,
**caractérisé en ce que**, dans un intervalle de mesure, l'on vérifie combien de fois ledit indicateur de pluie se situe au-dessus de la valeur seuil et, dès que plus de la moitié des mesures effectuées dans l'intervalle de mesure indiquent que ledit indicateur de pluie se situe au-dessus de la valeur seuil, l'on conclut à la présence d'un événement de précipitation.

9. Procédé selon l'une des revendications 5 à 8,
**caractérisé en ce que** lesdits écarts types sont déterminés par rapport à une période définie ($w_s$), qui est de préférence de 50 s.

**10.** Procédé selon la revendication 8,
**caractérisé en ce que** 600 mesures sont effectuées dans un intervalle de mesure d'une minute.

**11.** Procédé selon l'une des revendications précédentes,
**caractérisé en ce que** les informations relatives à la présence d'un événement de précipitation sont enregistrées et/ou transmises dans une mémoire pendant une période de 3 à 6 minutes, de préférence pendant environ 5 minutes, à compter de la détection de l'événement de précipitation.

**12.** Dispositif pour détecter des précipitations, comprenant au moins deux transducteurs acoustiques (S1, S2) entre lesquels est agencée une section de mesure et à partir desquels un transducteur acoustique (S1, S2) est alternativement agencé pour émettre des ondes ultrasonores le long de ladite section de mesure, tandis que le transducteur acoustique opposé (S1, S2) est agencé pour générer un signal de mesure spécifique aux ondes ultrasonores qui arrivent après propagation sur ladite section de mesure, et comprenant une unité d'évaluation qui est reliée auxdits transducteurs acoustiques par l'intermédiaire d'une liaison de transmission de signaux et qui génère, sur la base d'une fréquence du au moins un signal de mesure, une information sur au moins un paramètre atmosphérique,
**caractérisé en ce que** ladite unité d'évaluation est conçue pour détecter un événement de précipitation sur la base d'une variation des fréquences des signaux de mesure générés par les transducteurs acoustiques opposés, en tenant compte d'une amplitude des variations de fréquence des signaux de mesure et d'une comparaison des courbes de réponse de fréquence des signaux de mesure générés pendant la variation de fréquence.

**13.** Dispositif selon la revendication 12,
**caractérisé en ce que** ladite unité d'évaluation est conçue pour détecter l'apparition d'un événement de précipitation lorsqu'une valeur limite définie pour l'amplitude des variations de fréquence est dépassée et que les courbes de réponse des variations de fréquence des signaux de mesure générés par les transducteurs acoustiques opposés sont identiques, parallèles et/ou que les gradients moyens des courbes de réponse des variations de fréquence sont identiques.

**14.** Dispositif selon la revendication 13,
**caractérisé en ce que** la valeur limite prise en compte dans ladite unité d'évaluation pour l'amplitude de la variation de fréquence est supérieure à 800 Hz, de préférence supérieure à 1 kHz.

**15.** Dispositif selon l'une des revendications 12 à 14,
**caractérisé en ce que** lesdits transducteurs acoustiques sont réalisés sous forme de transducteurs piézoélectriques d'une fréquence propre de 58 kHz et d'une largeur de bande de 3 dB d'environ 6 kHz.

Fig.1

Fig.2

Fig.3

Fig.4

Schallgestützte Erfassung von Regenereignissen, Metek, 2021-09-23

Fig.5

Fig.6a

Fig.6b

EP 4 409 336 B1

Fig.6c

Fig.6e

EP 4 409 336 B1

EP 4 409 336 B1

Fig.6f

EP 4 409 336 B1

Fig.6g

Fig.6h

EP 4 409 336 B1

Fig.6i

EP 4 409 336 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 68901800 T2
- DE 102015004408 A1
- DE 10305139 B4

**In der Beschreibung aufgeführte Nicht-Patentliteratur**

- **ZHANG et al.** Effects of precipitation on sonic anemometer measurements of turbulent fluxes in the atmospheric surface layer. *Journal of Ocean University of China*, 2016, vol. 15 (3), 389-398